# EUROPÄISCHE PATENTSCHRIFT

(11) **EP 3 083 394 B1**
(45) Veröffentlichungstag und Bekanntmachung des Hinweises auf die Patenterteilung: **27.07.2022**
(21) Anmeldenummer: 14828127.2
(22) Anmeldetag: 26.11.2014
(51) Int. Cl.: B64C 1/06, B64C 1/12, B64F 5/00

(54) **HERSTELLVERFAHREN ZUM HERSTELLEN EINES TRAGENDEN RUMPFPANEELS SOWIE DAMIT HERSTELLBARES RUMPFPANEEL**
METHOD OF MANUFACTURING A FUSELAGE LOAD BEARING PANEL AND PANEL MANUFACTURED BY THE METHOD
PROCÉDÉ DE FABRICATION D'UN PANNEAU DE FUSELAGE PORTEUR AINSI QUE PANNEAU DE FUSELAGE POUVANT ÊTRE FABRIQUÉ PAR CE PROCÉDÉ

(30) Priorität: 18.12.2013 DE 102013021066
(43) Veröffentlichungstag der Anmeldung: 26.10.2016
(73) Patentinhaber: Airbus Defence and Space GmbH, 85521 Ottobrunn (DE)
(72) Erfinder: WEIMER, Christian, 81539 München (DE); RAUH, Rainer, 85305 Jetzendorf (DE)
(74) Vertreter: Kastel, Stefan
(86) Internationale Anmeldenummer: PCT/DE2014/000601
(87) Internationale Veröffentlichungsnummer: WO 2015/090263

(56) Entgegenhaltungen:
- EP-A2- 2 857 186
- WO-A2-2012/152934
- DE-A1-102009 015 856
- DE-B3-102012 019 905
- US-A- 5 985 362

## Beschreibung

Die Erfindung betrifft ein Herstellverfahren zum Herstellen eines tragenden Rumpfpaneels für einen Rumpfabschnitt eines Luftfahrzeugrumpfes im Bereich einer Kabine eines Luftfahrzeuges.

Bisher erfolgt die Entwicklung, Konzeption und Herstellung von Luftfahrzeugen, wie insbesondere Verkehrsflugzeugen, derart, dass von einem Flugzeughersteller zunächst die tragende Rumpfstruktur konzipiert und hergestellt wird und dann je nach Anforderungen des Verkehrsflugzeuges die Kabine entworfen und in die Rumpfstruktur eingepasst wird. Demnach werden heutzutage bei den großen Flugzeugherstellern, wie beispielsweise bei der Fa. Airbus, der strukturelle Flugzeugrumpf und die Kabine inklusive deren Verkleidungselemente hin zu der Struktur des Flugzeugrumpfes separat gefertigt. Ebenso findet die Integration von Systemen, wie Flugsystemen, Unterhaltungssystemen, Klimatisierungssystemen, Steuerungssystemen, als separater Arbeitsschritt zwischen Strukturfertigung und Kabinenintegration statt. Dieses Konzept hat sich zwar hinsichtlich der Variabilität der Kabinen und der so gegebenen möglichen Einsatzzwecken bewährt, führt aber zu einer großen Komplexität der Fertigung.

Zum Stand der Technik bezüglich Aufbau von Rumpfstrukturen für Luftfahrzeuge wird z.B. auf die DE 10 2010 013 370 A1, die EP 2 411 280 B1 sowie auf Herbeck/Kindervater: Ein neues Designkonzept für einen CFK-Flugzeugrumpf; Werkstoffkolloquium 2006; Wettbewerb der Werkstoffe; DLR Werkstoffkolloquium 2006 verwiesen.

WO 2012 / 152 934 A2 offenbart ein Paneel zur lösbaren Anordnung zwischen einer Außenhaut eines Transportmittels und einer Innenverkleidung des Transportmittels, mit einem plattenartigen Isolationskörper, der zumindest einen integrierten Klimakanal aufweist und zumindest eine zur Innenfläche abschnittsweise geöffnete nutenartige Leitungsführung hat, ein Verfahren zur Herstellung eines derartigen Paneels sowie ein Flugzeug mit einer Vielzahl von derartigen Paneelen.

Aus der DE 10 2012 019 905 B3 ist ein Rumpfstrukturbauteil für ein Luftfahrzeug bekannt, welches eine tragende Innenhaut, eine nicht tragende Außenhaut und einen Sandwichkern dazwischen aufweist. Als Sandwichkern wird eine Schaumstoffschicht vorgeschlagen. Die Innenhaut ist auf ihrer Innenseite mit Spanten und Stringern und auf ihrer Außenseite mit Stringern versehen.

US 5 985 362 A offenbart ein Isoliersystem für Rumpfwände eines Luftfahrzeugs. Die Isolierung wird durch einen aufgesprühten Schaum gebildet der gegen ein Barrierematerial und gegen die Innenseite der Außenhaut über jegliche nach einwärts vorspringende Strukturelemente gesprüht ist.

Aus der DE 10 2009 015 856 A1 ist ein Rumpfsegment für ein Luftfahrzeug und ein Verfahren zum Herstellen des Rumpfsegments bekannt. Das Rumpfsegment ist mit einer Außenhaut und einer Innenhaut versehen, die über einen Kern voneiander beabstandet sind. In den Kern sind Leitungskanäle zur Systemintegration integriert.

Aus der nachveröffentlichten EP2 857 186 A2 ist ein Verfahren zur Herstellung eines Faserverbundbauteils und einer Strukturkomponente eines Luft- oder Raumfahrzeugs bekannt, bei dem ein Schaumkörper ausgebildet und mit Einbuchtungen versehen wird. In den Einbuchtungen werden verstärkende Elemente ausgebildet. Anschließend wird der Schaumkörper mit den darin ausgebildeten Elementen mit einem Hautabschnitt verbunden.

Aufgabe der Erfindung ist es, die Herstellung eines Luftfahrzeugrumpfes und die Wartung von Luftfahrzeugen zu vereinfachen.

Zum Lösen dieser Aufgabe schlägt die Erfindung ein Herstellverfahren zum Herstellen eines tragenden Rumpfpaneels gemäß Anspruch 1 vor.

Vorteilhafte Ausgestaltungen der Erfindung sind Gegenstand der Unteransprüche. Die Erfindung schafft gemäß einem ersten Aspekt ein Herstellverfahren zum Herstellen eines tragenden Rumpfpaneels gemäss Anspruch 1.

Das Verfahren umfasst Schritte a) bis f), wobei in der gesamten hiesigen Offenbarung einschließlich der Ansprüche die Bezeichnungen der Schritte mit a) bis f) oder mit zusätzlichen Nummern lediglich zur einfacheren Bezugnahme gewählt ist und keinerlei Aussagen über eine bestimmte Reihenfolge der Schritte aussagt:
Vorzugsweise werden wenigstens zwei der Schritte a), c) und/oder d) zumindest zeitweise überschneidend und/oder parallel durchgeführt.

Vorzugsweise enthält Schritt a) den Schritt:
a1) Vormontieren des Füllpaneels.

Vorzugsweise enthält Schritt a) den Schritt:
a2) Fertigen des Füllpaneels aus Verbundwerkstoff oder Verbundwerkstoffen.

Vorzugsweise enthält Schritt a) den Schritt:
a3) Fertigen des Füllpaneels aus Profilelementen aus einem flächigen Material und Füllmaterial.

Vorzugsweise enthält Schritt a) den Schritt:
a4) Versehen des Füllpaneels mit einem Kernwerkstoff, insbesondere einem strukturellen Schaum.

Vorzugsweise enthält Schritt a) den Schritt:
a5) Versehen des Füllpaneels mit Vorsprüngen und Hohlräumen.

Vorzugsweise enthält Schritt a) den Schritt:
a6) Versehen des Füllpaneels mit Fügeflächen, die für eine stoffschlüssige Verbindung mit wenigstens einer der Schalen vorbereitet werden.

Vorzugsweise enthält Schritt a) wenigstens einen der Schritte:
a7.1) Fertigen des Füllpaneels in RTM-Technologie oder
a7.2) Fertigen des Füllpaneels in voll thermoplastischer Composite-Bauweise.

Vorzugsweise enthält Schritt a) den Schritt:
a8) Fertigen des Füllpaneels mit Omegaprofilen mit Schaumanteil.

Erfindungsgemäß entält Schritt b) den Schritt:
b1) Vormontieren wenigstens eines Funktionselements der Rumpfstruktur und/oder der Kabine in das Füllpaneel vor Durchführung der Schritte e) und f).

Vorzugsweise enthält Schritt b) den Schritt:
b2) Einbringen wenigstens eines Funktionselements der Rumpfstruktur und/oder der Kabine zwischen den Schritten e) und f) in das an das eine Rumpfbauelement befestigte Füllpaneel.

Vorzugsweise enthält Schritt b) den Schritt:
b3) Einbau wenigstens einer Systemkomponente eines Kabinensystems, eines Flugsystems und/oder eines Rumpfstruktursystems als Funktionselement in wenigstens einen Hohlraum des Füllelements.

Vorzugsweise enthält Schritt b) den Schritt:
b4) Einbringen wenigstens eines Funktionselements in wenigstens einen Hohlraum des Füllelements und Verfüllen des Hohlraums mit einem Isolationsmaterial und/oder Überdecken des Hohlraumes mit einer Schale im Rahmen der Durchführung wenigstens einer der Schritte e) und f).

Vorzugsweise enthält Schritt c) den Schritt:
c1) Fertigen der Außenhaut aus einem Metallmaterial.

Vorzugsweise enthält Schritt c) den Schritt:
c2) Fertigen der Außenhaut aus einem Verbundwerkstoff. Besonders bevorzugt wird die Außenhaut aus oder unter Verwendung eines Faserverbundwerkstoffs, wie z.B. CFK, gefertigt.

Vorzugsweise enthält Schritt c) den Schritt:
c3) Fertigen der Außenhaut mit einer Blitzschutzeinrichtung.

Für weitere Einzelheiten zu möglichen Blitzschutzeinrichtungen wird auf die DE 10 2011 112 518 A1 oder die DE 10 2006 046 002 A1 verwiesen.

Vorzugsweise enthält Schritt c) den Schritt:
c4) Fertigen der Außenhaut derart, dass Beschädigungsschutzanforderungen des Luftfahrzeugs erfüllt werden. Dies kann z.B. durch Ausrüsten der Außenhaut mit einer Beschädigungs-, Belastungs- und/oder Ermüdungsüberwachungseinrichtung oder durch gesonderte Fertigung der Struktur der Außenhaut entsprechend des Einsatzortes, z.B. mittels kraftflussgerechtem Faserverlauf von Fasern einer Faserverbundstruktur, durch Einsatz von Taylored Blanks mit entsprechend variablen Dicken usw. geschehen.

Für weitere Einzelheiten zu einer möglichen Beschädigungs-, Belastungs- und/oder Ermüdungsüberwachungseinrichtung wird ausdrücklich auf die WO 2012/010496, WO 2012/055699 A1, DE 10 2008 003 498 A1 und die WO 2009/071602 A2 verwiesen.

Vorzugsweise enthält Schritt d) den Schritt:
d1) Fertigen des Innenpaneels mit einer vorbestimmten Brandschutzeigenschaft. Insbesondere kann das Innenpaneel in Brandschutzausführung, z.B. durch entsprechende Materialauswahl, durch zusätzliches Vorsehen von Brandschutzmaterialien oder dergleichen gefertigt werden. Von besonderem Vorteil ist, dass das Innenpaneel aufgrund der Integration von Funktionselementen in das Füllpaneel mit entsprechend weniger Durchbrechungen oder Unterbrechungen, die ansonsten womöglich einer besonderen Brandschutzmaßnahme - wie z.B. Brandschott - bedürften, ausgebildet werden kann.

Vorzugsweise enthält Schritt d) den Schritt:
d2) Fertigen des Innenpaneels derart, dass Brandschutzanforderungen der Kabine erfüllt werden.

Vorzugsweise enthält Schritt d) den Schritt:
d3) Fertigen des Innenpaneels derart, dass es als Außenabschluss der Kabine zur Rumpfstruktur hin geeignet ist.

Vorzugsweise enthält Schritt e) den Schritt:
e1) stoffschlüssiges Verbinden des Füllpaneels mit der einen Schale.

Vorzugsweise enthält Schritt e) den Schritt:
e2) Verbinden des Füllpaneels mit der einen Schale durch Erzeugung kovalenter Bindungen. Vorzugsweise wird in einem Fügeverfahren eine Verbindung verwendet, die ko-valente Bindungen erzeugt, z.B. ein Diffusions-Bonding von TP zu TP.

Vorzugsweise enthält Schritt e) den Schritt:
e3) Anordnen des Füllpaneels mit offenen Hohlräumen, so dass eine offene Sandwichstruktur zum Einbringen von Funktionselementen in das Füllpaneel entsteht.

Vorzugsweise enthält Schritt e) den Schritt:
e4) Verkleben des Füllpaneels an vorbereiteten Fügeflächen des Füllpaneels mit der einen Schale.

Vorzugsweise enthält Schritt e) den Schritt:
e5) lösbares Verbinden des Füllpaneels mit der einen Schale.

Vorzugsweise enthält Schritt e) den Schritt:
e6) lösbares Befestigen des Füllpaneels an die eine Schale mittels einer Funktionsschicht.

Vorzugsweise enthält Schritt e) den Schritt:
e7) lösbares Befestigen des Füllpaneels an die eine Schale mittels eines sich unter einer Lösebehandlung - wie z.B. Erwärmen - lösenden Klebemittels.

Vorzugsweise enthält Schritt e) den Schritt:
e8) Befestigen des Füllpaneels zunächst nur an die Außenhaut.

Vorzugsweise enthält Schritt f) den Schritt:
f1) stoffschlüssiges Verbinden des Füllpaneels mit der anderen Schale.

Vorzugsweise enthält Schritt f) den Schritt:
f2) Verbinden des Füllpaneels mit der anderen Schale durch Erzeugung kovalenter Bindungen. Vorzugsweise wird in einem Fügeverfahren eine Verbindung verwendet, die ko-valente Bindungen erzeugt, z.B. ein Diffusions-Bonding von TP zu TP.

Vorzugsweise enthält Schritt f) den Schritt:
f3) Verkleben des Füllpaneels an vorbereiteten Fügeflächen des Füllpaneels mit der anderen Schale.

Vorzugsweise enthält Schritt f) den Schritt:
f4) lösbares Verbinden des Füllpaneels mit der andere Schale.

Vorzugsweise enthält Schritt f) den Schritt:
f5) lösbares Befestigen des Füllpaneels an die andere Schale mittels einer weiteren Funktionsschicht.

Vorzugsweise enthält Schritt f) den Schritt:
f6) lösbares Befestigen des Füllpaneels an die andere Schale mittels eines sich unter einer Lösebehandlung lösenden Klebemittels.

Vorzugsweise enthält Schritt f) den Schritt:
f7) Befestigen des Innenpaneels an das Füllelement, nachdem zunächst das Füllelement an die Außenhaut befestigt worden ist.

Vorzugsweise enthält Schritt f) den Schritt:
f8) Verschließen einer durch Hohlräume des Füllpaneels gebildeten offenen Sandwichstruktur, nachdem wenigstens ein Funktionselement in den Hohlraum eingebracht worden ist.

Mit dem Verfahren gemäß Ausführungsformen der Erfindung lässt sich ein tragendes Rumpfpaneel zum Bilden eines Rumpfabschnitts als Teil der Tragstruktur eines Luftfahrzeugrumpfes in einem Bereich einer Kabine eines Luftfahrzeuges herstellen, wobei das Rumpfpaneel in Sandwichbauweise mit einem Innenpaneel und einer Außenhaut als Schalen und einem zwischen den Schalen eingebetteten Füllpaneel als Kern ausgebildet ist, wobei die Außenhaut als Teil einer Rumpfstruktur und der äußeren Begrenzung des Luftfahrzeugrumpfes ausgebildet ist, wobei das Innenpaneel für eine Innenraumbegrenzung der Kabine ausgebildet ist und wobei Funktionselemente der Rumpfstruktur und der Kabine oder des Luftfahrzeugs in das Füllpaneel integriert sind und wobei das Füllpaneel mit darin integrierten Stegen, Spanten, und/oder Rippen als Funktionselemente zum tragenden Aufbau der Rumpfstruktur versehen und separat gefertigt ist, wobei beim Fertigen der Außenhaut und/oder des Innenpaneels mindestens eine der Schalen mit einer Positionierhilfe zum Positionieren des Füllpaneels versehen ist.

Bei einer vorteilhaften Verwendung des Verfahrens wird einen Luftfahrzeugrumpf oder eine Luftfahrzeugkabine, mit einem derartigen Rumpfpaneel versehen.

Besondere Vorteile bevorzugter Ausgestaltungen der Erfindung werden im Folgenden näher erläutert.

In der traditionellen Fertigung von Flugzeugrumpfen und deren Kabine werden der strukturelle Flugzeugrumpf und die Kabine inklusive deren Verkleidungselemente hin zur Struktur separat gefertigt. Ebenso findet die Systemintegration als separater Arbeitsschritt zwischen Strukturfertigung und Kabinenintegration statt. Im Gegensatz zu dieser traditionellen Entwicklungsweise und Fertigungsweise ist es mit der Erfindung möglich, während der Fertigung der Tragstruktur bereits Funktionselemente der Kabine bzw. bereits Funktionselemente der Tragstruktur oder auch Funktionselemente anderer Systeme des Luftfahrzeuges zu integrieren und die Struktur und die Kabinenfertigung in ein Gesamtkonzept zu überführen.

Bisher wurden jeweils einzelne Funktionalitäten in die Rumpfstruktur integriert, jedoch fehlt die Einbettung in ein übergreifendes Gesamtkonzept zur Rumpffertigung inklusive der Kabinenintegration und System integration zur übergreifenden Funktionsintegration.

Bei einer besonders bevorzugten Ausgestaltung des Herstellverfahrens findet während der Herstellung einer tragenden Sandwichstruktur für einen Luftfahrzeugrumpf, wie insbesondere einen Flugzeugrumpf, die Funktionsintegration statt. Es werden bereits bei der Entwicklung der Sandwichstruktur für den Flugzeugrumpf, z.B. Kabinenanforderungen, Systeminstallationen und Außenhautfertigung, in einem gemeinsamen Entwicklungs- und Herstellungskonzept integriert.

Es entsteht somit ein tragendes Rumpfpaneel, welches direkt die Funktion der Kabine, z.B. Brandschutzeigenschaft, der Systeminstallation und Wartbarkeit der Systeme sowie die strukturellen Eigenschaften der Außenhaut inklusive z.B. von Blitzschutzintegration oder sonstiger Anforderungen für die Außenhaut erfüllt.

Die Erweiterung der Bauweise - Berücksichtigung von Kabinenanforderungen bereits bei der Rumpffertigung bzw. Berücksichtigung von Anforderungen der Tragstruktur bei der Kabinenfertigung - kann auch dazu führen, dass auch Crash-Elemente in die Struktur eingearbeitet werden können.

Vorzugsweise werden durch das Konzept einfache, sektionsweise Modifikationen und Reparaturen möglich, was die Long-Life-Kosten eines Fluggerätes senken und die Recycling-Fähigkeit erhöhen wird.

Durch eine mögliche Nutzung von funktionsintegrierten Werkstoffsystemen bereits im Bauweisenkonzept und im Fertigungskonzept wird zusätzlich in einen Rumpf eingebrachtes Gewicht vermieden, welches durch die traditionelle separate Betrachtung der einzelnen Arbeitsabläufe eingebracht wird.

Zum Beispiel lässt sich durch eine Reduktion von Niet- und Schraubenverbindung und eine Überführung in Klebeverbindungen oder dergleichen eine deutliche Gewichts- und Kosteneinsparung erreichen.

Das Strukturkonzept einer Gesamtintegration der Fertigung von Rumpfstruktur und Kabinenelementen kann Arbeitsabläufe der Systemintegration vereinfachen und zusammenfassen, und somit können Kosten bei der Fertigung gespart werden.

Ein Ausführungsbeispiel der Erfindung wird hiernach anhand der Zeichnungen näher erläutert. Darin zeigt:
- Fig. 1: eine Schnittdarstellung durch ein tragendes Rumpfpaneel in Sandwichbauweise zum Aufbau eines einen Teil einer Außenwandung einer Kabine und gleichzeitig einen Teil einer tragenden Rumpfstruktur bildenden Rumpfpaneels;
- Fig. 2: eine Ansicht vergleichbar von Fig. 1 einer Vorstufe bei der Fertigung des Rumpfpaneels von Fig. 1.

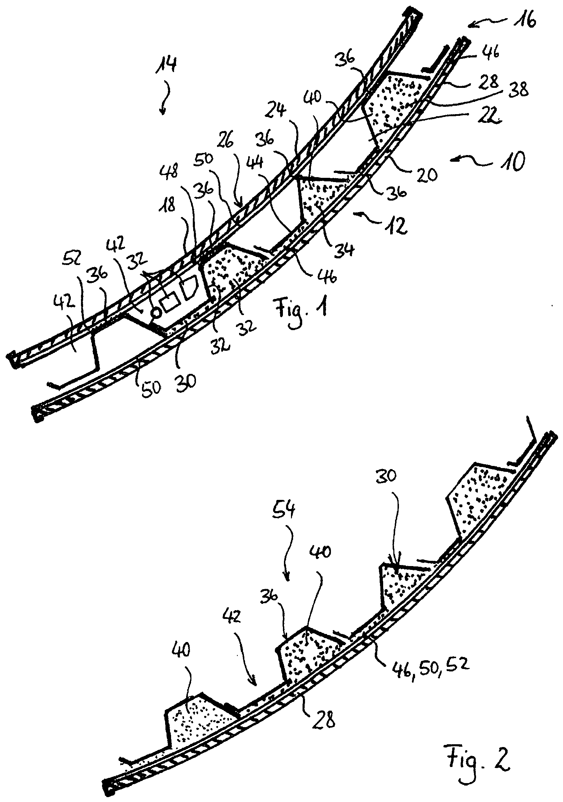

Fig. 1 zeigt ein Rumpfpaneel 10 zum Bilden eines Teils einer tragenden Rumpfstruktur 12 und einer Außenwandung einer Kabine 14 eines Luftfahrzeuges, wie beispielsweise eines Flugzeuges. Das Rumpfpaneel 10 ist in Sandwichbauweise bzw. als Sandwichelement 16 mit einer inneren Schale 18, einer äußeren Schale 20 und einem Kern 22 dazwischen ausgebildet.

Die innere Schale 18 wird durch ein Innenpaneel 24 gebildet, das zum Bilden einer Innenraumbegrenzung 26 der Kabine 14 dient.

Die äußere Schale 20 ist durch eine Außenhaut 28 gebildet, die zum Bilden eines Teils der Rumpfstruktur 12 und der äußeren Begrenzung des Luftfahrzeugrumpfes dient.

Der Kern 22 ist durch ein Füllpaneel 30 gebildet, in welches Funktionselemente 32 der Rumpfstruktur 12, der Kabine 14 oder eines sonstigen Systems des Luftfahrzeugs integriert sind.

Demnach ist das Rumpfpaneel 10 im Wesentlichen prinzipiell aus drei Kernelementen aufgebaut. Die Außenhaut 28 und das Innenpaneel 24 bilden die Schalen 18, 20. Durch einen Montageprozess werden die beiden Schalen 18, 20 miteinander verbunden, wobei die vormontierten Füllpaneele 30 zum Einsatz kommen.

Diese vormontierten Füllpaneele 30 werden z.B. in Verbundwerkstoffweise, wie z.B aus CFK-Werkstoffen, ausgeführt und beinhalten einen Kernwerkstoff 34 sowie vorbereitete Fügeflächen 36 zur Verbindung des Füllpaneels 30 mit den Schalen 18, 20.

Die Ausführung der Fügeflächen erfolgt derart, dass es bei der Fusion der Bauteile zu einer Materialverbindung auf Polymerebene kommt.

Die Herstellung des Füllpaneels 30 kann mittels einer RTM-Technologie erfolgen. "RTM" steht für Resin Transfer Moulding, zu Deutsch etwa "Spritzpressen". Das Resin Transfer Moulding ist ein Verfahren zur Herstellung von Formteilen aus Duroplasten und/oder Elastomeren. Im Vergleich zum Pressen wird hierbei die Formmasse mittels Kolben oder dergleichen Einspritzeinrichtungen von einer meist vorbeheizten Vorkammer über Verteilerkanäle in ein Formnest eingespritzt, worin sie unter Wärme und Druck aushärtet.

Die Herstellung der Füllpaneele 30 kann insbesondere mittels einer RTM-Technologie auch in großer Stückzahl erfolgen, so dass auch hohe Rumpfkadenzen erreichbar sind. Mit Hilfe der RTM-Methode ist es auch möglich, die entsprechenden Schnittstellen zur Einstellung der Fügeflächen 36 herzustellen.

Durch ein RTM-Verfahren kann z.B. ein einstückig ausgebildetes Füllpaneel 30 aus integriertem, strukturellem Schaum 38, welcher in ausgehärtetem Zustand zur Übertragung von Kräften und Lasten fähig ist, ausgebildet werden.

Die Herstellung der Füllpaneele 30 kann natürlich aber auch auf andere Art und Weise erfolgen, wie z.B. in voll thermoplastischer Composite-Bauweise.

Das Funktionselement 32 ist insbesondere mit Vorsprüngen 40 mit Fügeflächen 36 an deren Endflächen und Hohlräumen 42 dazwischen ausgebildet.

Die Hohlräume 42 können zum Aufnehmen der Funktionselemente 32 dienen und können bei der Herstellung einer Systeminstallation mit Isolationsmaterial (nicht dargestellt) aufgefüllt werden.

Der verwendete Werkstoff des strukturellen Schaums 38 kann ebenfalls isolierende Eigenschaften aufzeigen.

Eine derartige Bauweise ermöglicht es,
a) das Innenpaneel derart auszuführen, dass Brandschutzanforderungen der Kabine 14 eines Luftfahrzeuges erfüllt werden;
b) die Außenhaut 28 derart auszuführen, dass auch Blitzschutz- und Beschädigungsschutz-Anforderungen eines Luftfahrzeuges erfüllt werden; und
c) die Füllpaneele 30 in vormontierter Weise derart zu fertigen, dass sie Systemfunktionen tragen.

Da die Füllpaneele 30 in einem separaten Prozess gefertigt werden können, können verschiedene Ausführungen vorkommen.

In dem dargestellten Ausführungsbeispiel sind neben dem strukturellen Schaum 38 auch Profilelemente 44 angedeutet, die tragende Aufgaben mit übernehmen.

Insbesondere können durch den strukturellen Schaum 38 und/oder Profilelemente 44 - eventuell in Kombination mit einzusetzenden Spanten - die Rumpflasten übertragen werden.

Beispielsweise können teilweise Omegaprofile mit Schaumanteil oder auch einfache Rippen in dem Füllpaneel 30 vorkommen. Ebenfalls können Knotenpunkte in dem Füllpaneel 30 realisiert werden.

Dadurch lassen sich sowohl tragende Funktionselemente 32 - beispielsweise die Profilelemente 44 - als auch isolierende Funktionselemente 32 durch den strukturellen Schaum 38 und/oder das auszufüllende Isoliermaterial - und auch weitere Funktionselemente 32, wie z.B. Klimatisierungselemente, Luftführungskanäle, Kabelkanäle, Verkabelungen usw. allesamt in dem Füllpaneel 30 integrieren.

Im Folgenden wird ein möglicher Montageprozess für das in Fig. 1 dargestellte Rumpfpaneel 10 näher erläutert.

Ein Montageprozess erfolgte vorzugsweise derart, dass die äußere Schale 20, gebildet durch die Außenhaut 28, derart gefertigt wird, dass bereits Positionierhilfen (nicht dargestellt) für die vormontierten Füllpaneele 30 eingebaut sind und entsprechende Vorbereitungen zur "Fusion" der Außenhaut 28 mit den vormontierten Füllpaneelen 30 vorliegt.

Die Außenhaut 28 kann z.B. aus Composite-Materialien, wie insbesondere CFK-Materialien, oder aus metallischen Werkstoffen oder aus Mischformen (z.B. Metall und CFK) bestehen oder aufgebaut sein.

In einem parallelen Schritt wird das Innenpaneel 24 gefertigt, welches vorzugsweise ebenfalls Positionierhilfen (nicht dargestellt) trägt und - wie oben beschrieben - die entsprechenden Eigenschaften für die Nutzung als Kabine 14 aufweist.

Die vorzugsweise vormontierten Füllpaneele 30 werden ebenfalls gefertigt und entsprechend mit Systemfunktion ausgerüstet. Zum Beispiel können bereits Kabel, Isolierungen, Lüftungen usw. in das Füllpaneel 30 bei dessen Fertigung integriert werden. Diese Füllpaneele 30 sind vorzugsweise in Verbundmaterialien, wie insbesondere CFK oder dergleichen Composite, auszuführen, um Wärmebrücken zwischen Innenpaneel 24 und Außenhaut 28 zu vermeiden.

Die Montage erfolgt nun vorzugsweise mittels einer eingearbeiteten Funktionsschicht 46, 48. Zum Beispiel wird eine Folie aus zum stoffschlüssigen Verbinden der Schalen 18, 20 mit dem Füllpaneel 30 geeigneten Material vorgesehen. Vorzugsweise wird die Funktionsschicht 46, 48 derart ausgebildet, dass ein Lösen der Verbindung durch eine spezielle Behandlung möglich ist. Beispielsweise wird die Folie aus einem warmschmelzenden Klebemittel 52 hergestellt.

Die Funktionsschicht 46, 48 ermöglicht eine strukturelle Verbindung zwischen den Schalen 18, 20 und dem vormontierten Füllpaneel 30.

Hierzu wird vorzugsweise zunächst das Füllpaneel 30 mit einer ersten Funktionsschicht 46 mit der Außenhaut 28 verbunden. Es entsteht nun eine offene Sandwichstruktur, wobei die Hohlräume 42 noch frei liegen.

Die offene Sandwichstruktur ermöglicht es, weiter Systeme in den Rumpf zu installieren. Die offene Sandwichstruktur 54 ist in Fig. 2 dargestellt.

Insbesondere können nun die weiteren Funktionselemente 32 in Hohlräume 42 eingebracht werden und somit das Rumpfpaneel 10 fertig mit Funktionselementen 32 ausgerüstet werden. Dadurch lassen sich ganz unterschiedliche Systeme in das Rumpfpaneel 10 integrieren.

Ist die Ausrüstung erfolgt, wird die offene Sandwichstruktur 54 mit dem Innenpaneel 24 geschlossen. Dieses erfolgt ebenfalls mit einem Montageprozess basierend auf einer zweiten Funktionsschicht 48, wobei ebenfalls die Folie 50 mit dem lösbaren Klebemittel 52 eingesetzt werden kann.

Zur Demontage oder Reparatur kann die verbindungsherstellende Funktionsschicht 46 genutzt werden. Beispielsweise bei Verwendung eines heißschmelzenden Klebemittels als Werkstoff für die Folie 50 kann die Funktionsschicht 46, 48 erwärmt und gelöst werden. So kann man die in dem Füllpaneel 30 integrierten Funktionselemente 32 erreichen.

### Bezugszeichenliste:

- 10: Rumpfpaneel
- 12: Rumpfstruktur
- 14: Kabine
- 16: Sandwichelement
- 18: innere Schale
- 20: äußere Schale
- 22: Kern
- 24: Innenpaneel
- 26: Innenraumbegrenzung
- 28: Außenhaut
- 30: Füllpaneel
- 32: Funktionselement
- 34: Kernwerkstoff
- 36: Fügefläche
- 38: struktureller Schaum
- 40: Vorsprung
- 42: Hohlraum
- 44: Profilelement
- 46: erste Funktionsschicht
- 48: zweite Funktionsschicht
- 50: Folie
- 52: Klebemittel
- 54: offene Sandwichstruktur

## Patentansprüche

1. Herstellverfahren zum Herstellen eines tragenden Rumpfpaneels (10) für einen Rumpfabschnitt eines Luftfahrzeugrumpfes in einem Bereich einer Kabine (14) eines Luftfahrzeuges, mit:
Anfertigen des Rumpfpaneels (10) in Sandwichbauweise mit einem Innenpaneel (24) und einer Außenhaut (28) als Schalen (18, 20) und einem zwischen den Schalen (18, 20) eingebetteten Füllpaneel (30) als Kern (22), unter Ausbilden der Außenhaut (28) als Teil einer Rumpfstruktur (12) und der äußeren Begrenzung des Luftfahrzeugrumpfes,
Ausbilden des Innenpaneels (24) für eine Innenraumbegrenzung (26) der Kabine (14),
Integration von Funktionselementen (32) der Rumpfstruktur (12) und integration von Funktionselementen (32) der Kabine (14) und/oder des Luftfahrzeugs in das Füllpaneel (30), wobei das Verfahren die Schritte umfasst:
a) Entwerfen und separates Fertigen des Füllpaneels (30) derart, dass es zur Aufnahme von Funktionselementen (32) der Rumpfstruktur (12) und zur Aufnahme von Funktionselementen (32) der Kabine (14) und/oder des Luftfahrzeuges ausgebildet ist,
b) Versehen des Füllpaneels (30) mit Funktionselementen (32) der Kabine (14) und/oder des Luftfahrzeuges, Versehen des Füllpaneels (30) im Laufe der Fertigung gemäß Schritt a) mit Stegen, Spanten und/oder Rippen als Funktionselemente (32) zum tragenden Aufbau der Rumpfstruktur (12),
c) Fertigen der Außenhaut (28) als Schale (18, 20) des Rumpfpaneels (10),
d) Fertigen des Innenpaneels (24) als Schale (18, 20) des Rumpfpaneels (10),
e) Befestigen des Füllpaneels (30) an eine der Schalen (18, 20) und
f) Befestigen der anderen Schale (18, 20) an dem Füllpaneel (30),
wobei beim Fertigen gemäß Schritt c) und/oder Schritt d) mindestens eine der Schalen (18, 20) mit einer Positionierhilfe zum Positionieren des Füllpaneels (30) versehen ist,
wobei Schritt b) den Schritt enthält:
b1) Vormontieren der Stege (12), Spanten (13) und/oder Rippen als Funktionselemente (32) der Rumpfstruktur (12) in das Füllpaneel (30) vor den Schritten e) und f).

2. Herstellverfahren nach Anspruch 1,
**dadurch gekennzeichnet,**
**dass** Schritt a) wenigstens einen, mehrere oder alle der Schritte enthält:
a1) Vormontieren des Füllpaneels (30),
a2) Fertigen des Füllpaneels (30) aus Verbundwerkstoff oder Verbundwerkstoffen;
a3) Fertigen des Füllpaneels (30) aus Profilelementen (44) aus einem flächigen Material und Füllmaterial;
a4) Versehen des Füllpaneels (30) mit einem Kernwerkstoff (34), insbesondere einem strukturellen Schaum (38);
a5) Versehen des Füllpaneels (30) mit Vorsprüngen (40) und Hohlräumen (42);
a6) Versehen des Füllpaneels (30) mit Fügeflächen (36), die für eine stoffschlüssige Verbindung mit wenigstens einer der Schalen (18, 20) vorbereitet werden;
a7.1) Fertigen des Füllpaneels (30) in RTM-Technologie;
a7.2) Fertigen des Füllpaneels (30) in voll thermoplastischer Composite-Bauweise; und/oder
a8) Fertigen des Füllpaneels (30) mit Omegaprofilen mit Schaumanteil.

3. Herstellverfahren nach einem der Ansprüche 1 oder 2,
**dadurch gekennzeichnet,**
**dass** Schritt b) wenigstens einen, mehrere oder alle der Schritte enthält:
b2) Einbringen wenigstens eines Funktionselements (32) der Rumpfstruktur (12) und/oder der Kabine (14) zwischen den Schritten e) und f) in das an das eine Rumpfbauelement befestigte Füllpaneel (30);
b3) Einbau wenigstens einer Systemkomponente eines Kabinensystems, eines Flugsystems und/oder eines Rumpfstruktursystems als Funktionselement (32) in wenigstens einen Hohlraum (42) des Füllelements; und/oder
b4) Einbringen wenigstens eines Funktionselements (32) in wenigstens einen Hohlraum (42) des Füllelements und Verfüllen des Hohlraums (42) mit einem Isolationsmaterial und/oder Überdecken des Hohlraumes (42) mit einer Schale (18, 20) im Rahmen der Durchführung wenigstens einer der Schritte e) und f).

4. Herstellverfahren nach einem der Ansprüche 1 bis 3,
**dadurch gekennzeichnet,**
**dass** Schritt c) wenigstens einen, mehrere oder alle der Schritte enthält:
c1) Fertigen der Außenhaut (28) aus einem Metallmaterial;
c2) Fertigen der Außenhaut (28) aus einem Verbundwerkstoff, insbesondere Faserverbundwerkstoff;
c3) Fertigen der Außenhaut (28) mit einer Blitzschutzeinrichtung;
c4) Fertigen der Außenhaut (28) derart, dass Beschädigungsschutzanforderungen des Luftfahrzeugs erfüllt werden, insbesondere durch Ausrüsten der Außenhaut (28) mit einer Beschädigungs- oder Ermüdungsüberwachungseinrichtung.

5. Herstellverfahren nach einem der Ansprüche 1 bis 4,
**dadurch gekennzeichnet,**
**dass** Schritt d) einen, mehrere oder alle der folgenden Schritte aufweist:
d1) Fertigen des Innenpaneels (24) mit einer vorbestimmten Brandschutzeigenschaft;
d2) Fertigen des Innenpaneels (24) derart, dass Brandschutzanforderungen der Kabine (14) erfüllt werden;
d3) Fertigen des Innenpaneels (24) derart, dass es als Außenabschluss der Kabine (14) zur Rumpfstruktur (12) hin geeignet ist.

6. Herstellverfahren nach einem der Ansprüche 1 bis 5,
**dadurch gekennzeichnet,**
**dass** Schritt e) einen mehrere oder alle der folgenden Schritte enthält:
e1) stoffschlüssiges Verbinden des Füllpaneels (30) mit der einen Schale (18);
e2) Verbinden des Füllpaneels (30) mit der einen Schale (18) unter Erzeugung kovalenter Bindungen;
e3) Anordnen des Füllpaneels (30) mit offenen Hohlräumen (42), so dass eine offene Sandwichstruktur (54) zum Einbringen von Funktionselementen (32) in das Füllpaneel (30) entsteht;
e4) Verkleben des Füllpaneels (30) an vorbereiteten Fügeflächen (36) des Füllpaneels (30) mit der einen Schale (18);
e5) lösbares Verbinden des Füllpaneels (30) mit der einen Schale (18);
e6) lösbares Befestigen des Füllpaneels (30) an die eine Schale (18) mittels einer Funktionsschicht (46, 48);
e7) lösbares Befestigen des Füllpaneels (30) an die eine Schale (18) mittels eines sich unter einer Lösebehandlung lösenden Klebemittels (52); und/oder
e8) Befestigen des Füllpaneels (30) zunächst nur an die Außenhaut (28).

7. Herstellverfahren nach einem der Ansprüche 1 bis 6,
**dadurch gekennzeichnet,**
**dass** Schritt f) einen mehrere oder alle der folgenden Schritte enthält:
f1) stoffschlüssiges Verbinden des Füllpaneels (30) mit der anderen Schale (20);
f2) Verbinden des Füllpaneels (30) mit der anderen Schale (20) unter Erzeugung kovalenter Bindungen;
f3) Verkleben des Füllpaneels (30) an vorbereiteten Fügeflächen (36) des Füllpaneels (30) mit der anderen Schale (20);
f4) lösbares Verbinden des Füllpaneels (30) mit der anderen Schale (20);
f5) lösbares Befestigen des Füllpaneels (30) an die andere Schale (20) mittels einer weiteren Funktionsschicht (48);
f6) lösbares Befestigen des Füllpaneels (30) an die andere Schale (20) mittels eines sich unter einer Lösebehandlung lösenden Klebemittels (52); und/oder
f7) Befestigen des Innenpaneels (24) an das Füllelement, nachdem zunächst das Füllelement an die Außenhaut (28) befestigt worden ist;
f8) Verschließen einer durch Hohlräume (42) des Füllpaneels (30) gebildeten offenen Sandwichstruktur (54), nachdem wenigstens ein Funktionselement (32) in den Hohlraum (42) eingebracht worden ist.

## Claims

1. Production method for producing a load-bearing fuselage panel (10) for a fuselage portion of an aircraft fuselage in a region of a cabin (14) of an aircraft, comprising:
producing the fuselage panel (10) in a sandwich-type construction with an inner panel (24) and an outer skin (28) in the form of shells (18, 20), and a filler panel (30), which is embedded between the shells (18, 20), in the form of a core (22), such that the outer skin (28) is configured as part of a fuselage structure (12) and the outer boundary of the aircraft fuselage,
configuring the inner panel (24) for an interior space boundary (26) of the cabin (14),
integrating functional elements (32) of the fuselage structure (12), and integrating functional elements (32) of the cabin (14) and/or of the aircraft, into the filler panel (30), wherein the method comprises the following steps:
a) designing and separately manufacturing the filler panel (30) in such a way that it is configured to accommodate functional elements (32) of the fuselage structure (12) and to accommodate functional elements (32) of the cabin (14) and/or of the aircraft,
b) providing the filler panel (30) with functional elements (32) of the cabin (14) and/or of the aircraft, providing the filler panel (30), during the manufacturing operation according to step a), with webs, frames and/or ribs in the form of functional elements (32) for the load-bearing construction of the fuselage structure (12),
c) manufacturing the outer skin (28) in the form of a shell (18, 20) of the fuselage panel (10),
d) manufacturing the inner panel (24) in the form of a shell (18, 20) of the fuselage panel (10),
e) fastening the filler panel (30) to one of the shells (18, 20), and
f) fastening the other shell (18, 20) to the filler panel (30),
wherein, during the manufacturing operation according to step c) and/or step d), at least one of the shells (18, 20) is provided with a positioning aid for positioning the filler panel (30),
wherein step b) comprises the following step:
b1) pre-assembling the webs (12), frames (13) and/or ribs in the form of functional elements (32) of the fuselage structure (12) into the filler panel (30) prior to steps e) and f).

2. Production method according to Claim 1, **characterized**
**in that** step a) comprises at least one, a plurality of or all the following steps:
a1) pre-assembling the filler panel (30);
a2) manufacturing the filler panel (30) from composite material or composite materials;
a3) manufacturing the filler panel (30) from profile elements (44) composed of a sheetlike material and filler material;
a4) providing the filler panel (30) with a core material (34), in particular a structural foam (38);
a5) providing the filler material (30) with protrusions (40) and cavities (42);
a6) providing the filler panel (30) with joining surfaces (36) which are prepared for materially bonded connection to at least one of the shells (18, 20);
a7.1) manufacturing the filler panel (30) in RTM technology;
a7.2) manufacturing the filler panel (30) in fully thermoplastic composite construction; and/or
a8) manufacturing the filler panel (30) with omega profiles with a foam proportion.

3. Production method according to either one of Claims 1 and 2,
**characterized**
**in that** step b) preferably comprises one, a plurality of or all the following steps:
b2) introducing at least one functional element (32) of the fuselage structure (12) and/or of the cabin (14), between steps e) and f), into the filler panel (30) which is fastened to the one fuselage structural element;
b3) installing at least one system component of a cabin system, of a flight system and/or of a fuselage structure system in the form of a functional element (32) into at least one cavity (42) of the filler element; and/or
b4) introducing at least one functional element (32) into at least one cavity (42) of the filler element and filling the cavity (42) with an insulation material and/or covering the cavity (42) with a shell (18, 20) in the course of carrying out at least one of steps e) and f) .

4. Production method according to one of Claims 1 to 3,
**characterized**
**in that** step c) comprises one, a plurality of or all the following steps:
c1) manufacturing the outer skin (28) from a metal material;
c2) manufacturing the outer skin (28) from a composite material, in particular a fibre composite material;
c3) manufacturing the outer skin (28) with a lightning protection device;
c4) manufacturing the outer skin (28) in such a way that damage protection requirements of the aircraft are met, in particular by equipping the outer skin (28) with a damage or fatigue monitoring device.

5. Production method according to one of Claims 1 to 4,
**characterized**
**in that** step d) comprises one, a plurality of or all the following steps:
d1) manufacturing the inner panel (24) with a predetermined fire protection property;
d2) manufacturing the inner panel (24) in such a way that fire protection requirements of the cabin (14) are met;
d3) manufacturing the inner panel (24) in such a way that it is suitable as outer termination of the cabin (14) in the direction of the fuselage structure (12).

6. Production method according to one of Claims 1 to 5,
**characterized**
**in that** step e) comprises one, a plurality of or all the following steps:
e1) connecting the filler panel (30) to the one shell (18) in a materially bonded manner;
e2) connecting the filler panel (30) to the one shell (18) so as to produce covalent bonds;
e3) arranging the filler panel (30) with open cavities (42), such that an open sandwich structure (54) for the introduction of functional elements (32) into the filler panel (30) is produced;
e4) adhesively bonding the filler panel (30) to the one shell (18) at prepared joining surfaces (36) of the filler panel (30);
e5) releasably connecting the filler panel (30) to the one shell (18);
e6) releasably fastening the filler panel (30) to the one shell (18) by means of a functional layer (46, 48);
e7) releasably fastening the filler panel (30) to the one shell (18) by means of an adhesive (52) which dissolves under a dissolution treatment; and/or
e8) fastening the panel (30) initially only to the outer skin (28).

7. Production method according to one of Claims 1 to 6,
**characterized**
**in that** step f) comprises one, a plurality of or all the following steps:
f1) connecting the filler panel (30) to the other shell (20) in a materially bonded manner;
f2) connecting the filler panel (30) to the other shell (20) so as to produce covalent bonds;
f3) adhesively bonding the filler panel (30) to the other shell (20) at prepared joining surfaces (36) of the filler panel (30);
f4) releasably connecting the filler panel (30) to the other shell (20);
f5) releasably fastening the filler panel (30) to the other shell (20) by means of a further functional layer (48) ;
f6) releasably fastening the filler panel (30) to the other shell (20) by means of an adhesive (52) which dissolves under a dissolution treatment; and/or
f7) fastening the inner panel (24) to the filler element, after the filler element has initially been fastened to the outer skin (28);
f8) closing an open sandwich structure (54) which is formed by cavities (42) of the filler panel (30), after at least one functional element (32) has been introduced into the cavity (42).

## Revendications

1. Procédé de fabrication pour la fabrication d'un panneau de fuselage porteur (10) pour une section de fuselage d'un fuselage d'aéronef dans une zone d'une cabine (14) d'un aéronef, comprenant :
la production du panneau de fuselage (10) selon une construction en sandwich comprenant un panneau intérieur (24) et une peau extérieure (28) en tant que coques (18, 20) et un panneau de remplissage (30) en tant que noyau (22) intégré entre les coques (18, 20), en formant la peau extérieure (28) en tant que partie d'une structure de fuselage (12) et la délimitation extérieure du fuselage d'aéronef,
la formation du panneau intérieur (24) pour une délimitation d'espace intérieur (26) de la cabine (14), l'intégration d'éléments fonctionnels (32) de la structure du fuselage (12) et l'intégration d'éléments fonctionnels (32) de la cabine (14) et/ou de l'aéronef dans le panneau de remplissage (30), le procédé comprenant les étapes suivantes :
a) la conception et la production séparée du panneau de remplissage (30), de telle sorte qu'il est configuré pour recevoir des éléments fonctionnels (32) de la structure de fuselage (12) et pour recevoir des éléments fonctionnels (32) de la cabine (14) et/ou de l'aéronef,
b) l'équipement du panneau de remplissage (30) avec des éléments fonctionnels (32) de la cabine (14) et/ou de l'aéronef, l'équipement du panneau de remplissage (30) au cours de la production selon l'étape a) avec des entretoises, des membrures et/ou des nervures en tant qu'éléments fonctionnels (32) pour la construction porteuse de la structure de fuselage (12),
c) la production de la peau extérieure (28) en tant que coque (18, 20) du panneau de fuselage (10),
d) la production du panneau intérieur (24) en tant que coque (18, 20) du panneau de fuselage (10),
e) la fixation du panneau de remplissage (30) à l'une des coques (18, 20) et
f) la fixation de l'autre coque (18, 20) au panneau de remplissage (30),
lors de la production selon l'étape c) et/ou l'étape d), au moins l'une des coques (18, 20) étant équipée d'un auxiliaire de positionnement pour positionner le panneau de remplissage (30),
l'étape b) comprenant l'étape suivante :
b1) le prémontage des entretoises (12), des membrures (13) et/ou des nervures en tant qu'éléments fonctionnels (32) de la structure de fuselage (12) dans le panneau de remplissage (30) avant les étapes e) et f).

2. Procédé de fabrication selon la revendication 1, **caractérisé en ce que** l'étape a) comprend au moins une, plusieurs ou toutes les étapes suivantes :
a1) le prémontage du panneau de remplissage (30), a2) la production du panneau de remplissage (30) à partir de matériau composite ou de matériaux composites ;
a3) la production du panneau de remplissage (30) à partir d'éléments profilés (44) en un matériau plat et de matériau de remplissage ;
a4) l'équipement du panneau de remplissage (30) avec un matériau de noyau (34), notamment une mousse structurelle (38) ;
a5) l'équipement du panneau de remplissage (30) avec des protubérances (40) et des cavités (42) ;
a6) l'équipement du panneau de remplissage (30) avec des surfaces de joint (36), qui sont préparées pour une liaison par accouplement de matière avec au moins l'une des coques (18, 20) ;
a7.1) la production du panneau de remplissage (30) en technologie RTM ;
a7.2) la production du panneau de remplissage (30) en construction composite entièrement thermoplastique ; et/ou
a8) la production du panneau de remplissage (30) avec des profilés oméga ayant une proportion de mousse.

3. Procédé de fabrication selon l'une quelconque des revendications 1 ou 2, **caractérisé en ce que** l'étape b) comprend au moins une, plusieurs ou toutes les étapes suivantes :
b2) l'introduction d'au moins un élément fonctionnel (32) de la structure du fuselage (12) et/ou de la cabine (14) entre les étapes e) et f) dans le panneau de remplissage (30) fixé à l'un des éléments de construction de fuselage ;
b3) l'installation d'au moins un composant de système d'un système de cabine, d'un système de vol et/ou d'un système de structure de fuselage en tant qu'élément fonctionnel (32) dans au moins une cavité (42) de l'élément de remplissage ; et/ou
b4) l'introduction d'au moins un élément fonctionnel (32) dans au moins une cavité (42) de l'élément de remplissage et le remplissage de la cavité (42) avec un matériau isolant et/ou le recouvrement de la cavité (42) avec une coque (18, 20) dans le cadre de la réalisation d'au moins l'une des étapes e) et f).

4. Procédé de fabrication selon l'une quelconque des revendications 1 à 3, **caractérisé en ce que** l'étape c) comprend au moins une, plusieurs ou toutes les étapes suivantes :
c1) la production de la peau extérieure (28) à partir d'un matériau métallique ;
c2) la production de la peau extérieure (28) à partir d'un matériau composite, notamment d'un matériau composite de fibres ;
c3) la production de la peau extérieure (28) avec un dispositif de protection contre la foudre ;
c4) la production de la peau extérieure (28) de telle sorte que des exigences de protection contre les dommages de l'aéronef sont satisfaites, notamment par équipement de la peau extérieure (28) avec un dispositif de surveillance des dommages ou de la fatigue.

5. Procédé de fabrication selon l'une quelconque des revendications 1 à 4, **caractérisé en ce que** l'étape d) comprend une, plusieurs ou toutes les étapes suivantes :
d1) la production du panneau intérieur (24) avec une caractéristique de protection contre l'incendie prédéterminée ;
d2) la production du panneau intérieur (24) de telle sorte que des exigences de protection contre l'incendie de la cabine (14) sont satisfaites ;
d3) la production du panneau intérieur (24) de telle sorte qu'il est approprié en tant que fermeture extérieure de la cabine (14) vers la structure de fuselage (12).

6. Procédé de fabrication selon l'une quelconque des revendications 1 à 5, **caractérisé en ce que** l'étape e) comprend une, plusieurs ou toutes des étapes suivantes :
e1) la liaison par accouplement de matière du panneau de remplissage (30) à l'une des coques (18) ;
e2) la liaison du panneau de remplissage (30) à l'une des coques (18) en créant des liaisons covalentes ;
e3) l'agencement du panneau de remplissage (30) avec des cavités ouvertes (42) de telle sorte qu'une structure en sandwich ouverte (54) est produite pour l'introduction d'éléments fonctionnels (32) dans le panneau de remplissage (30) ;
e4) le collage du panneau de remplissage (30) sur des surfaces de joint préparées (36) du panneau de remplissage (30) à l'une des coques (18) ;
e5) la liaison amovible du panneau de remplissage (30) à l'une des coques (18) ;
e6) la fixation amovible du panneau de remplissage (30) à l'une des coques (18) au moyen d'une couche fonctionnelle (46, 48) ;
e7) la fixation amovible du panneau de remplissage (30) à l'une des coques (18) au moyen d'un agent adhésif (52) qui se dissous sous l'effet d'un traitement de dissolution ; et/ou
e8) la fixation du panneau de remplissage (30) d'abord uniquement sur la peau extérieure (28).

7. Procédé de fabrication selon l'une quelconque des revendications 1 à 6, **caractérisé en ce que** l'étape f) comprend une, plusieurs ou toutes les étapes suivantes :
f1) la liaison par accouplement de matière du panneau de remplissage (30) à l'autre coque (20) ;
f2) la liaison du panneau de remplissage (30) à l'autre coque (20) en créant des liaisons covalentes ;
f3) le collage du panneau de remplissage (30) sur des surfaces de joint préparées (36) du panneau de remplissage (30) à l'autre coque (20) ;
f4) la liaison amovible du panneau de remplissage (30) à l'autre coque (20) ;
f5) la fixation amovible du panneau de remplissage (30) à l'autre coque (20) au moyen d'une autre couche fonctionnelle (48) ;
f6) la fixation amovible du panneau de remplissage (30) à l'autre coque (20) au moyen d'un agent adhésif (52) qui se dissous sous l'effet d'un traitement de dissolution ; et/ou
f7) la fixation du panneau intérieur (24) à l'élément de remplissage, après avoir d'abord fixé l'élément de remplissage à la peau extérieure (28) ;
f8) la fermeture d'une structure en sandwich ouverte (54) formée par des cavités (42) du panneau de remplissage (30), après avoir introduit au moins un élément fonctionnel (32) dans la cavité (42).
